# EUROPEAN PATENT APPLICATION

(11) **EP 4 550 523 A1**
(43) Date of publication of application: **07.05.2025**
(21) Application number: 23830369.7
(22) Date of filing: 28.06.2023
(51) Int. Cl.: H01M 10/613, H01M 10/6556, H01M 10/6568

(54) **POWER BATTERY HEAT EXCHANGER, POWER BATTERY SYSTEM AND ELECTRIC VEHICLE**

(30) Priority: 30.06.2022 CN 202210772688
(71) Applicant: BYD Company Limited, Shenzhen, Guangdong 518118 (CN)
(72) Inventor: ZHONG, Rijun, Shenzhen, Guangdong 518118 (CN); CAI, Yaomin, Shenzhen, Guangdong 518118 (CN); XIAO, Xiaolin, Shenzhen, Guangdong 518118 (CN); ZHU, Ruiyuan, Shenzhen, Guangdong 518118 (CN); GU, Zhengrong, Shenzhen, Guangdong 518118 (CN)
(74) Representative: Mathys & Squire
(86) International application number: PCT/CN2023/103477
(87) International publication number: WO 2024/002198

(57) **Abstract**

A power battery heat exchanger, a power battery system and an electric vehicle. The power battery heat exchanger comprises a connector, a first header assembly and a second header assembly which are arranged separately in a first direction, and a plurality of harmonica tubes arranged between the first header assembly and the second header assembly and separately arranged in a second direction. The first header assembly comprises a first header and a second header, an inlet of the connector is separately in communication with first ends of part of the harmonica tubes by means of the first header, and an outlet of the connector is separately in communication with first ends of the other harmonica tubes by means of the second header. Second ends of the plurality of harmonica tubes are in communication with each other by means of the second header assembly.

## Description

### CROSS-REFERENCE TO RELATED APPLICATIONS

The present disclosure claims priority to and benefits of Chinese Patent Application No. 202210772688.X, filed on June 30, 2022, and entitled "POWER BATTERY HEAT EXCHANGER, POWER BATTERY SYSTEM, AND ELECTRIC VEHICLE". The entire content of the above-referenced application is incorporated herein by reference.

### FIELD

The present disclosure relates to the field of power battery technologies, and specifically, to a power battery heat exchanger, a power battery system, and an electric vehicle.

### BACKGROUND

In the related art, a collecting tube assembly of a heat exchanger for direct cooling of a power battery is usually formed by a number of round tubes and three-channel tubes. In addition, the collecting tube assembly generally does not heat or cool a battery system, causing heat or cold loss and reducing heat exchange efficiency of the heat exchanger.

### SUMMARY

An objective of the present disclosure is to provide a power battery heat exchanger, a power battery system, and an electric vehicle. The power battery heat exchanger arranges a first collecting tube and a second collecting tube as a first collecting tube assembly. In this way, a quantity of lines of the first collecting tube assembly is reduced, which has high space utilization, reduces ineffective heat exchange, improves heat exchange efficiency of the heat exchanger, and reduces material costs.

To achieve the foregoing objective, according to a first aspect of the present disclosure, a power battery heat exchanger is provided and includes:
a connector, the connector including an inlet and an outlet;
a first collecting tube assembly and a second collecting tube assembly arranged spaced away in a first direction, the first collecting tube assembly including a first collecting tube and a second collecting tube; and
a number of harmonica tubes, arranged between the first collecting tube assembly and the second collecting tube assembly and arranged at intervals in a second direction. The harmonica tube includes a first end and a second end that are opposite to each other. The inlet of the connector is respectively in communication with first ends of some harmonica tubes through the first collecting tube, and the outlet of the connector is respectively in communication with first ends of other harmonica tubes through the second collecting tube. Second ends of the number of harmonica tubes are in communication through the second collecting tube assembly.

Optionally, the first direction is perpendicular to the second direction.

Optionally, in the second direction, at least two outermost harmonica tubes are in communication with the first collecting tube.

Optionally, a quantity of harmonica tubes is an even number, and a quantity of harmonica tubes connected to the first collecting tube is equal to a quantity of harmonica tubes connected to the second collecting tube.

Optionally, the quantity of harmonica tubes is eight, in the second direction, four innermost harmonica tubes are respectively in communication with the second collecting tube, and other four harmonica tubes are respectively in communication with the first collecting tube.

Optionally, the quantity of harmonica tubes is eight, in the second direction, two outermost harmonica tubes and two innermost harmonica tubes are respectively in communication with the first collecting tube, and other four harmonica tubes are respectively in communication with the second collecting tube.

Optionally, the second collecting tube assembly includes a third collecting tube and a fourth collecting tube;

the third collecting tube is in communication with second ends of four adjacently arranged harmonica tubes; and the fourth collecting tube is in communication with second ends of other four adjacently arranged harmonica tubes.

Optionally, the power battery heat exchanger further includes a vapor chamber arranged on a side of the number of harmonica tubes, and the number of harmonica tubes are fixedly connected to the vapor chamber.

Optionally, the first collecting tube is provided with a number of first strip holes extending in a length direction of the first collecting tube, and the harmonica tube is fixedly connected to the first strip hole, to cause a number of flow channels of the harmonica tube to be in communication with the first collecting tube; and/or
the second collecting tube is provided with a number of second strip holes extending in a length direction of the second collecting tube, and the harmonica tube is fixedly connected to the second strip hole, to cause the number of flow channels of the harmonica tube to be in communication with the second collecting tube.

Optionally, the connector includes a liquid inlet in communication with the inlet and a liquid outlet in communication with the outlet, the liquid inlet is in communication with the first collecting tube through a first connection tube, and the liquid outlet is in communication with the second collecting tube through a second connection tube.

According to a second aspect of the present disclosure, a power battery system is further provided and includes a power battery. The power battery system further includes the foregoing power battery heat exchanger. The power battery heat exchanger is arranged on a surface of the power battery and is configured to heat and/or cool the power battery.

According to a third aspect of the present disclosure, an electric vehicle is further provided. The electric vehicle includes the foregoing power battery system.

Through the foregoing technical solutions, that is, the power battery heat exchanger of the present disclosure, the first collecting tube assembly is arranged as the first collecting tube and the second collecting tube, and the first collecting tube and the second collecting tube are respectively in communication with the inlet and the outlet of the connector. In this way, a refrigerant entering through the inlet directly enters some harmonica tubes after passing through the first collecting tube, is combined by the second collecting tube assembly and flows into remaining harmonica tubes, and finally passes through the second collecting tube and flows out through the outlet of the connector to form a circuit. The number of harmonica tubes exchange heat for the power battery through the vapor chamber, to heat or cool the power battery. In the power battery heat exchanger of the present disclosure, the first collecting tube assembly includes only the first collecting tube and the second collecting tube. In this way, a quantity of lines of the first collecting tube assembly is reduced as a whole, space utilization is improved, ineffective heat exchange is reduced, heat exchange efficiency of the heat exchanger is improved, and material costs are reduced.

Other features and advantages of the present disclosure will be described in detail in following specific implementations.

### BRIEF DESCRIPTION OF THE DRAWINGS

The accompanying drawings are used for providing a further understanding of the present disclosure and constitute a part of the specification, and are used for explaining the present disclosure together with the specific implementations below, but are not intended to limit the present disclosure. In the drawings:
FIG. 1 is a schematic diagram of a structure of a power battery heat exchanger in the related art;
FIG. 2 is a schematic top view of the structure of the power battery heat exchanger in the related art;
FIG. 3 is a schematic diagram of a structure of a power battery system according to an exemplary embodiment of the present disclosure, which shows mounting of a power battery heat exchanger and a power battery.
FIG. 4 is an exploded view of the power battery system in FIG. 3;
FIG. 5 is a schematic diagram of flow of a refrigerant in a power battery heat exchanger according to an exemplary embodiment of the present disclosure;
FIG. 6 is a schematic diagram of flow of a refrigerant in a power battery heat exchanger according to another exemplary embodiment of the present disclosure;
FIG. 7 is a schematic diagram of a partial structure of a connector of a power battery heat exchanger according to an exemplary embodiment of the present disclosure;
FIG. 8 is a schematic diagram of a structure of a first collecting tube assembly in a power battery heat exchanger according to an exemplary embodiment of the present disclosure;
FIG. 9 is a schematic diagram of a partial structure of a harmonica tube of a power battery heat exchanger according to an exemplary embodiment of the present disclosure; and
FIG. 10 is a block diagram of a structure of an electric vehicle according to an exemplary embodiment of the present disclosure.

### DETAILED DESCRIPTION

The following describes specific implementations of the present disclosure in detail with reference to the accompanying drawings. It should be understood that the specific implementations described herein are merely used to describe and explain the present disclosure, but are not intended to limit the present disclosure.

In the present disclosure, unless otherwise stated, used orientation words such as "up, down, left, and right", generally refer to up, down, left, and right of the accompanying drawing; "inner and outer" refer to "inner and outer" with respect to an outline of a corresponding component; "X" refers to a first direction; and "Y" refers to a second direction. In addition, terms "first", "second", "third", "fourth", and the like used in the present disclosure are to distinguish one element from another element, and do not have order and importance. In addition, when the following descriptions are made with reference to the accompanying drawings, unless otherwise explained, the same reference numerals in different accompanying drawings represent the same or similar elements. The foregoing definitions are merely used to explain and illustrate the present disclosure, and are not to be construed as a limitation on the present disclosure.

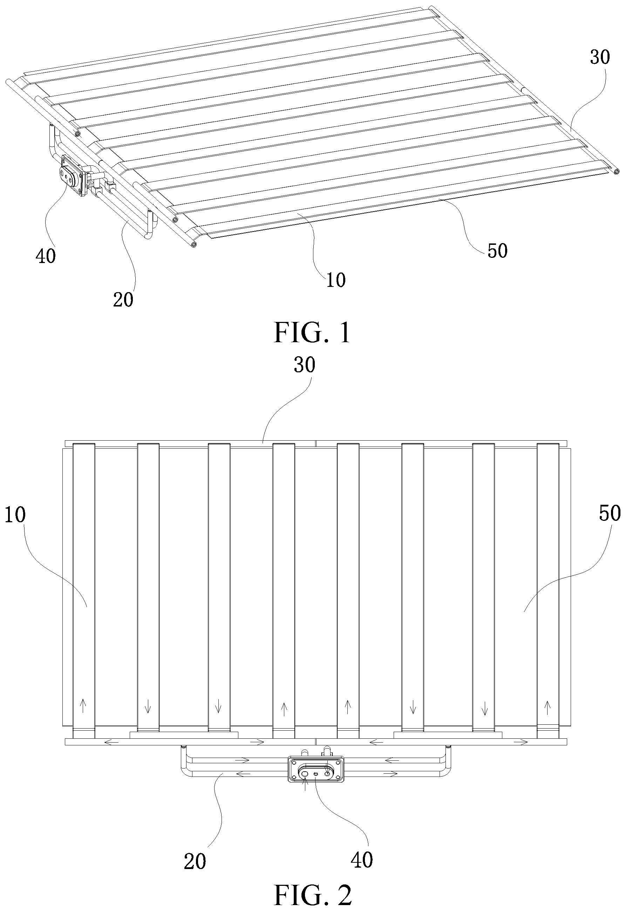

In the related art, a heat exchanger for direct cooling of a power battery is shown in FIG. 1 and FIG. 2. The heat exchanger is mainly formed by welding a harmonica tube 10, a collecting tube assembly 20, a tail end collecting tube 30, a connector 40, and a vapor chamber 50. The connector 40 is connected to an air conditioning system of a whole vehicle. The connector 40, the collecting tube assembly 20, the tail end collecting tube 30, and the harmonica tube 10 are welded together to form the heat exchanger with a flow channel inside. The vapor chamber 50 is welded and fixed to the harmonica tube 10. Currently, the heat exchanger is connected to the whole vehicle through a two-hole connector, and the harmonica tube is used as a component that exchanges heat with a battery in the entire heat exchanger. To maximize a capability of the heat exchanger, the harmonica tube covers the power battery. Therefore, a connection between the connector and the harmonica tube needs to be transitioned through a collecting tube assembly. The collecting tube assembly 20 of the heat exchanger is formed by nine round tubes and two three-channel tubes. In addition, the collecting tube assembly cannot be in direct contact with the battery, and cannot heat or cool a battery system, causing heat or cold loss and reducing heat exchange efficiency of the heat exchanger.

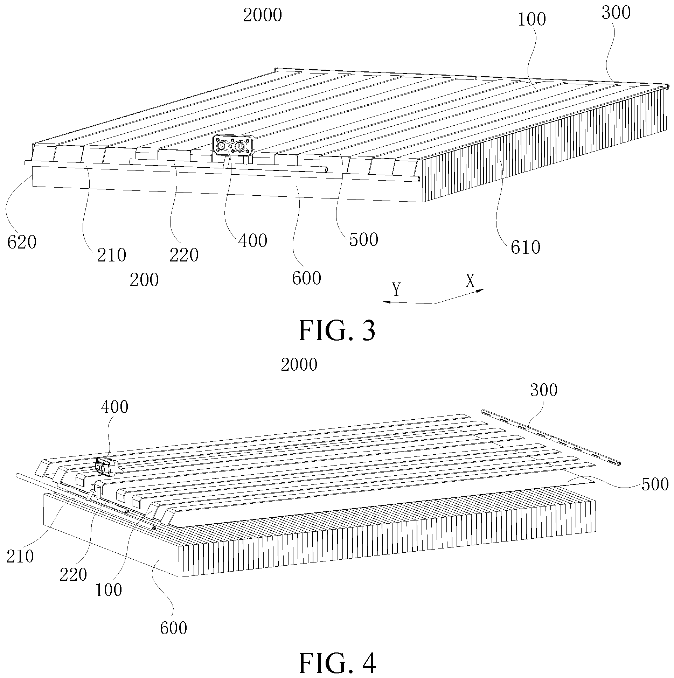

As shown in FIG. 3 to FIG. 9, to achieve the foregoing objectives, according to a first aspect of the present disclosure, a power battery heat exchanger 1000 is provided and includes a connector 400, a vapor chamber 500, a first collecting tube assembly 200 and a second collecting tube assembly 300 arranged spaced away in a first direction X, and a number of harmonica tubes 100 arranged between the first collecting tube assembly 200 and the second collecting tube assembly 300 and arranged at intervals in a second direction Y. The number of harmonica tubes 100 are connected to the vapor chamber 500. The first direction X is perpendicular to the second direction Y. The harmonica tube 100 includes a first end 101 and a second end 102 that are opposite to each other. The first collecting tube assembly 200 includes a first collecting tube 210 and a second collecting tube 220. The connector 400 includes an inlet 401 and an outlet 402. The inlet 401 of the connector 400 is respectively in communication with first ends 101 of some harmonica tubes 100 through the first collecting tube 210. The outlet 402 of the connector 400 is respectively in communication with first ends 101 of other harmonica tubes 100 through the second collecting tube 220. Second ends 102 of the number of harmonica tubes 100 are in communication through the second collecting tube assembly 300.

Through the foregoing technical solutions, that is, the power battery heat exchanger 1000 of the present disclosure, the first collecting tube 210 and the second collecting tube 220 are arranged as the first collecting tube assembly 200, and the first collecting tube 210 and the second collecting tube 220 are respectively in communication with the inlet 401 and the outlet 402 of the connector 400. In this way, a refrigerant entering through the inlet 401 directly enters some harmonica tubes 100 after passing through the first collecting tube 210, is combined by the second collecting tube assembly 300 and flows into remaining harmonica tubes 100, and finally passes through the second collecting tube 220 and flows out through the outlet 402 of the connector 400 to form a circuit. The number of harmonica tubes 100 exchange heat for the power battery 600 through the vapor chamber 500, to heat or cool the power battery 600. In the power battery heat exchanger 1000 of the present disclosure, the first collecting tube assembly 200 includes only the first collecting tube 210 and the second collecting tube 220. In this way, a quantity of lines of the first collecting tube assembly 200 is reduced as a whole, which has high space utilization, avoids ineffective heat exchange, improves heat exchange efficiency of the power battery heat exchanger 1000, and reduces material costs.

It should be noted that the inlet 401 and the outlet 402 of the connector 400 are configured for inflow and outflow of the refrigerant in the entire power battery heat exchanger 1000. The harmonica tube 100 has a number of flow channels 110 inside. The connector 400, the first collecting tube 210, the second collecting tube 220, the harmonica tube 100, and the second collecting tube assembly 300 are embedded and welded to each other, and channels in components are in communication with each other to form a channel for flow of the refrigerant in the power battery heat exchanger 1000. To increase a heat exchange area of the entire power battery heat exchanger 1000, the vapor chamber 500 and the harmonica tube 100 are welded together.

It should be noted that the first direction X is perpendicular to the second direction Y. To be specific, an extending direction of the number of harmonica tubes 100 is perpendicular to an extending direction of the first collecting tube 210, the second collecting tube 220, and the second collecting tube assembly 300, which facilitates flow uniformity of the refrigerant from the collecting tubes into the harmonica tubes 100.

In some embodiments, the first direction X and the second direction Y may alternatively be at an angle, but are not vertically arranged, which may also meet the foregoing communication requirement. For example, the harmonica tube 100 may extend in the first direction X, the first collecting tube 210 and the second collecting tube 220 extend in the second direction Y, and an angle between the first direction X and the second direction Y is 15°, 30°, 45°, 60°, 75°, 105°, 120°, 135°, 150°, 165°, or the like.

As shown in FIG. 3, the power battery 600 adopts a long-battery transverse arrangement solution. Two ends of the power battery 600 are respectively a battery positive pole 610 and a battery negative pole 620. The battery positive electrode 610 of the power battery 600 is arranged toward the battery negative electrode 620 in a direction consistent with the second direction Y of the power battery heat exchanger 1000. When the power battery 600 is at a high temperature, temperatures of the positive and negative poles at the two ends of the power battery 600 are higher than a temperature in the middle. Therefore, when the power battery 600 cools down, the cooling of the two ends of the power battery 600 needs to be considered first.

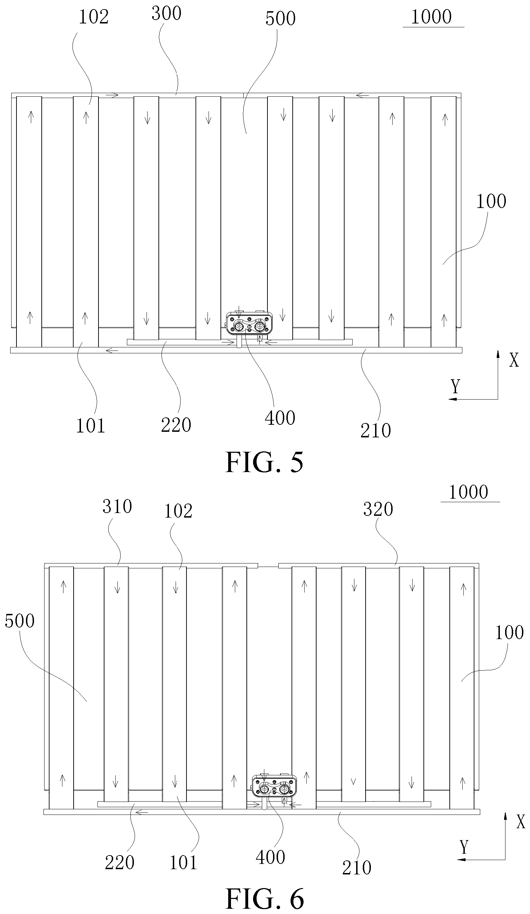

In some embodiments, in the second direction Y, at least two outermost harmonica tubes 100 are in communication with the first collecting tube 210. As shown in FIG. 5 and FIG. 6, first ends 101 of at least leftmost and rightmost harmonica tubes 100 are in communication with the first collecting tube 210, to serve as a channel for the refrigerant to first enter, which has the best cooling effect. First ends 101 of other harmonica tubes 100 located at a middle position are in communication with the second collecting tube 220, and serve as a channel for the refrigerant to finally flow out. The cooling effect is slightly poorer than that of the two outermost harmonica tubes 100, to meet an actual use requirement of the power battery 600 and reduce a temperature difference of the power battery 600. It should be noted that the second ends 102 of the number of harmonica tubes 100 are in communication through the second collecting tube assembly 300. In this way, the number of harmonica tubes 100 are in communication to form flow of the refrigerant.

According to the foregoing temperature feature of the power battery 600 that the temperature at the two ends is relatively high and the temperature in the middle is relatively low, a flow direction of the refrigerant in the harmonica tubes 100 of the power battery heat exchanger 1000 is redesigned. The foregoing power battery heat exchanger 1000 is connected to the air conditioning system. In other words, the refrigerant in the air conditioning system enters through the inlet 401 of the connector 400, flows to the first collecting tube 210, then is divided from the first collecting tube 210 to the left and right outermost harmonica tubes 100 or harmonica tubes 100 close to the outside, flows back through the second collecting tube assembly 300 and other harmonica tubes 100 to the second collecting tube 220, and then flows out through the outlet 402 of the connector 400 to the air conditioning system. The power battery heat exchanger 1000 is hardly connected and connected in parallel in the air conditioning system of the whole vehicle through the connector 400. When the power battery system needs to reduce a temperature, an air conditioning controller controls the refrigerant to flow to the power battery heat exchanger 1000, which has an effect of reducing the temperature of the power battery 600.

Similarly, when the temperature of the power battery 600 is relatively low, and when heating is required, the refrigerant enters through the outlet 402 of the connector 400, flows through the second collecting tube 220 and a number of harmonica tubes 100 at the middle position, flows back through the second collecting tube assembly 300 and other harmonica tubes 100 on the outside to the first collecting tube 210, and then flows out through the inlet 401 of the connector 400 to the air conditioning system, so that heating of the power battery may be implemented.

It should be noted that the first collecting tube 210 and the second collecting tube 220 may both be aluminum tubes, or may be made of other metal materials, for example, copper or aluminum alloy materials.

To further improve uniformity of cooling and heating of the power battery heat exchanger 1000, as shown in FIG. 5 and FIG. 6, in some embodiments of the present disclosure, a quantity of harmonica tubes 100 is an even number, and a quantity of harmonica tubes 100 connected to the first collecting tube 210 is equal to a quantity of harmonica tubes 100 connected to the second collecting tube 220. It is equivalent to that, a flow rate of the refrigerant flowing into the harmonica tube 100 and a flow rate of the refrigerant flowing out of the harmonica tube 100 can be maintained to be substantially equal. In other words, in a case that the flow directions of the refrigerants in different harmonica tubes 100 are set according to the feature of the power battery 600 to adapt to different temperatures at the two ends of the power battery 600 and the middle portion of the power battery 600, the flow rates and pressure drops all over the power battery heat exchanger 1000 can be maintained to be uniform to some extent.

As shown in FIG. 5, in some embodiments, the quantity of harmonica tubes 100 is eight. In the second direction, four innermost harmonica tubes 100 are respectively in communication with the second collecting tube 220, and other four harmonica tubes 100 are respectively in communication with the first collecting tube 210. The first ends 101 of two leftmost harmonica tubes 100 and two rightmost harmonica tubes 100 are respectively in communication with the first collecting tube 210, the first ends 101 of the four harmonica tubes 100 at the middle position are respectively in communication with the second collecting tube 220, and the second ends 102 of the eight harmonica tubes 100 are respectively in communication through the second collecting tube assembly 300. In a cooling process, the refrigerant of the air conditioning system enters through the inlet 401 of the connector 400, and flows through the first collecting tube 210 to the four harmonica tubes 100 on the left side and the right side respectively. The refrigerant merges in the second collecting tube assembly 300 at second ends 102 of the four harmonica tubes 100, then flows into the second collecting tube 220 through the four harmonica tubes 100 that are in communication with the second collecting tube assembly 300 and that are located at the middle position, and flows back into the air conditioning system through the outlet 402 of the connector 400. In a flow process, the refrigerant first enters the two leftmost harmonica tubes 100 and the two rightmost harmonica tubes 100, and cools the two ends of the power battery 600 with a relatively high temperature, so that the power battery 600 can reach a suitable temperature range most quickly. Then, the four harmonica tubes 100 at the middle position cool the middle position of the battery, which can also meet a temperature requirement of the power battery 600. In a heating process, the flow direction is exactly opposite. To be specific, the refrigerant enters through the outlet 402 of the connector 400 and flows out through the inlet 401 of the connector 400, so that the heating of the battery can be implemented. Compared with the related art, in the first collecting tube assembly 200 of the present disclosure, a quantity of diverting tubes is simplified, and heat loss is avoided. Therefore, through the foregoing eight harmonica tubes 100 in combination with the vapor chamber 500, a heat dissipation requirement can be met.

As shown in FIG. 6, in some other embodiments, the quantity of harmonica tubes 100 is eight. In the second direction, two outermost harmonica tubes 100 and two innermost harmonica tubes 100 are respectively in communication with the first collecting tube 210, and other four harmonica tubes 100 are respectively in communication with the second collecting tube 220. In the second direction Y, first ends 101 of the leftmost and rightmost harmonica tubes 100 and two midmost harmonica tubes are respectively in communication with the first collecting tube 210, while first ends 101 of remaining four harmonica tubes 100 are respectively in communication with the second collecting tube 220, and second ends 102 of the eight harmonica tubes 100 are respectively in communication with the second collecting tube assembly 300. In a cooling process, the refrigerant of the air conditioning system enters through the inlet 401 of the connector 400 and flows through the first collecting tube 210 to four harmonica tubes 100: the rightmost one, the leftmost one, and the midmost two. The refrigerant merges in the second collecting tube assembly 300 at second ends 102 of the four harmonica tubes 100, then flows into the second collecting tube 220 through two harmonica tubes 100 that are in communication with the second collecting tube assembly 300 and that are located between the leftmost harmonica tube 100 and the midmost harmonica tubes 100 and two harmonica tubes 100 that are located between the rightmost harmonica tube 100 and the midmost harmonica tubes 100, and flows back into the air conditioning system through the outlet 402 of the connector 400. In a flow process, the refrigerant first enters the leftmost harmonica tube 100, the rightmost harmonica tube 100, and the midmost harmonica tubes 100, and cools the two ends of the power battery 600 with a relatively high temperature and the midmost position that is less prone to heat dissipation. In this way, the power battery can reach a suitable temperature range most quickly. Then, the other four harmonica tubes 100 cool a position between the two ends and the middle portion of the battery, further meeting the temperature requirement of the power battery 600. In a heating process, the flow direction is exactly the opposite. To be specific, the refrigerant enters through the outlet 402 of the connector 400 and flows out through the inlet 401 of the connector 400, so that the heating of the battery can be implemented. Details are not described herein again.

The second collecting tube assembly 300 may be constructed by using any appropriate structure, and may be formed by using a tube extending in the second direction Y and having two ends sealed. The tube includes, but is not limited to, an aluminum tube. As shown in FIG. 6, in some embodiments of the present disclosure, the second collecting tube assembly 300 includes a third collecting tube 310 and a fourth collecting tube 320. The third collecting tube 310 is in communication with second ends 102 of four adjacently arranged harmonica tubes 100. The fourth collecting tube 320 is in communication with second ends 102 of other four adjacently arranged harmonica tubes 100. That is, the third collecting tube 310 is in communication with the second ends 102 of the left four harmonica tubes 100. During cooling, among the four harmonica tubes 100, the refrigerant flows from the two harmonica tubes 100 on the two sides into the third collecting tube 310, and the refrigerant in the third collecting tube 310 flows into the two middle harmonica tubes 100. In addition, the fourth collecting tube 320 is in communication with the second ends 102 of the right four harmonica tubes 100. During cooling, among the four harmonica tubes 100, the refrigerant flows from the two harmonica tubes 100 on the two sides into the fourth collecting tube 320, and the refrigerant in the fourth collecting tube 320 flows into the two middle harmonica tubes 100. During heating, the flow direction is exactly opposite. It may also be understood that the eight harmonica tubes 100 are divided into a left group and a right group, to avoid affecting flow distribution of the refrigerant in each harmonica tube 100 as a result of merging when the refrigerant flows into the second collecting tube assembly 300, and further improve flow stability during cooling or heating.

In some embodiments, the second collecting tube assembly 300 may alternatively be a straight tube extending in the second direction. Two ends of the straight tube are sealed, and the second ends 102 of the number of harmonica tubes 100 are respectively connected to the straight tube at intervals. In this way, it is also possible that the refrigerant flows into some harmonica tubes 100, and flows out from other harmonica tubes 100. It should be noted that to achieve the foregoing effect of improving the stability of the internal flow rate, a block seal member may be arranged at a middle position of the straight tube, and the straight tube is divided into two sections. The left four harmonica tubes 100 are in communication with one of the sections, and the right four harmonica tubes 100 are in communication with other sections, which can also achieve the objective of stabilizing the flow rate.

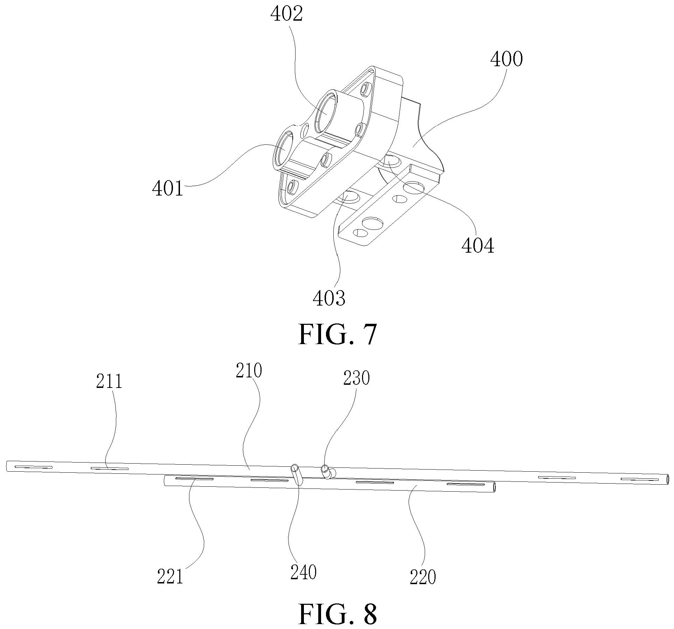

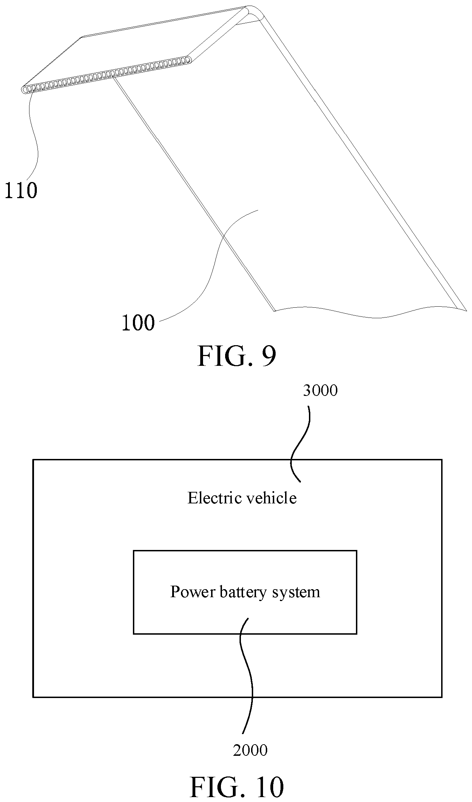

To improve reliability of connection of the first collecting tube 210 and the second collecting tube 220 to the harmonica tube 100, as shown in FIG. 8 and FIG. 9, in some embodiments of the present disclosure, the first collecting tube 210 is provided with a number of first strip holes 211 extending in a length direction of the first collecting tube 210, and the harmonica tube 100 is fixedly connected to the first strip hole 211, to cause a number of flow channels 110 of the harmonica tube 100 to be in communication with the first collecting tube 210. The first collecting tube 210 is provided with a number of first strip holes 211 corresponding to a width of the harmonica tube 100. The harmonica tube 100 is embedded in the first strip hole 211 and is connected to the first strip hole 211 by welding.

In some embodiments, the second collecting tube 220 is provided with a number of second strip holes 221 extending in a length direction of the second collecting tube 220, and the harmonica tube 100 is fixedly connected to the second strip hole 221, to cause the number of flow channels 110 of the harmonica tube 100 to be in communication with the second collecting tube 220. The second collecting tube 220 is provided with a number of second strip holes 221 corresponding to the width of the harmonica tube 100. The harmonica tube 100 is embedded in the second strip hole 221 and is connected to the second strip hole 221 by welding.

It should be noted that as shown in FIG. 9, an end of the harmonica tube 100 is curved downward relative to a portion connecting the harmonica tube 100 to the vapor chamber 500, and is connected to the first collecting tube assembly 200, for wrapping the power battery 600 when connected to the power battery 600. The other end may be a straight section, that is, the straight section and the portion connected to the vapor chamber 500 may be in a same plane, that is, the other end is not curved and is directly connected to the second collecting tube assembly 300.

The connector 400 may be configured in any appropriate manner. As shown in FIG. 7 and FIG. 8, in some embodiments of the present disclosure, the connector 400 may include the inlet 401, the outlet 402, a liquid inlet 403 in communication with the inlet 401, and a liquid outlet 404 in communication with the outlet 402. The liquid inlet 403 is in communication with the first collecting tube 210 through a first connection tube 230, and the liquid outlet 404 is in communication with the second collecting tube 220 through a second connection tube 240. The connector 400 is connected to the lines of the air conditioning system through the inlet 401 and the outlet 402 of the connector 400. For example, the connector may be connected to a refrigerating and heating line of a vehicle cab, definitely, or may be connected to other corresponding lines that can achieve refrigerating and heating, provided that heat exchange of the power battery 600 is implemented.

In the related art, as shown in FIG. 1 and FIG. 2, the heat exchanger is mainly formed by welding the harmonica tube 10, the collecting tube assembly, the tail end collecting tube, the connector 40, and the vapor chamber 50. The connector 40 is connected to the air conditioning system of the whole vehicle. The connector 40, the collecting tube assembly, and the harmonica tube 10 are welded together to form a heat exchanger with a flow channel inside. The vapor chamber 50 is welded and fixed to the harmonica tube 10. The collecting tube assembly includes a total of 9 tubes: two connection tubes, two three-channel valves, four diverting tubes, a collecting tube 1, and two collecting tubes 2. The connector 40 is respectively connected to the two three-channel valves through the two connection tubes. The three-channel valve is further connected to the two collecting tubes 2 through a left diverting tube and a right diverting tube with a diverting function. The three-channel valve is connected to the collecting tube 1 through the two diverting tubes with left and right shunting functions. As shown in FIG. 2, the inlet and the outlet are integrated into the connector 40. For example, the collecting tube assembly may be formed by 9 round tubes. The collecting tube assembly serves as a transition assembly between the connector 40 and the harmonica tubes 10, and plays a role of distributing a flow rate of the connector 40 to the harmonica tubes 10. As shown in FIG. 2, the refrigerant flows in from the inlet of the connector 40 and is divided into a left flow channel and a right flow channel, and each flow channel is further divided into two flow channels. Finally, in the collecting tube 1, the refrigerant flows into four flow channels to the harmonica tube 10. The flow channels flow to the tail end collecting tube, and then reversely flow from the other four harmonica tubes 10 back to the collecting tube 2 of the collecting tube assembly. The four flow channels merge into two flow channels, then merge into a flow channel, and flow out of the outlet of the connector.

Compared with the solutions in the foregoing related art, according to the power battery heat exchanger 1000 provided in the present disclosure, the quantity of lines of the collecting tube assembly in the heat exchanger is reduced from the original 9 to 4. In this way, the materials are reduced, and the production costs are reduced. In addition, since the original 9 lines on the collecting tube assembly are arranged outside the power battery 600, the effect of reducing the temperature of the battery cannot be achieved. Currently, the quantity of lines of the collecting tube assembly is reduced to 4, which can reduce ineffective heat exchange and improve the heat exchange efficiency of the heat exchanger.

According to a second aspect of the present disclosure, a power battery system 2000 is further provided and includes a power battery 600. The power battery system 2000 further includes the foregoing power battery heat exchanger 1000. The power battery heat exchanger 1000 is arranged on a surface of the power battery 600, and is configured to heat and/or cool the power battery 600. A heater of the power battery 600, that is, the harmonica tube 100 and the vapor chamber 500 may be arranged on an upper surface of the power battery 600, or may be arranged on a lower surface of the power battery 600, provided that cooling or heating of the power battery 600 can be implemented. In addition, that the power battery heat exchanger 1000 is arranged on a surface of the power battery 600 may be understood as being directly or indirectly arranged on the surface of the power battery 600. For example, the power battery heat exchanger 1000 may be attached to the surface of the power battery 600 or a thermally conductive adhesive may be arranged between the power battery heat exchanger 1000 and the power battery 600. The power battery heat exchanger 1000 is bonded to the surface of the power battery 600 through the thermally conductive adhesive.

A direction of the two ends of the power battery 600 (that is, a direction of a battery positive pole 610 of the power battery 600 facing a battery negative pole 620) corresponds to the second direction of the power battery heat exchanger 1000. To be specific, in the second direction, at least two outermost harmonica tubes 100 correspond to the two ends of the power battery 600, to improve a cooling capability at the two ends of the power battery 600 when cooling is required, and improve a heating capability at the middle position of the battery when heating is required.

As shown in FIG. 10, according to a third aspect of the present disclosure, an electric vehicle 3000 is further provided. The electric vehicle 3000 includes the foregoing power battery system 2000. Therefore, the electric vehicle 3000 also has advantages of the foregoing power battery system 2000. Details are not described herein again.

The optional implementations of the present disclosure are described in detail above with reference to the accompanying drawings. However, the present disclosure is not limited to the specific details in the foregoing implementations, a number of simple deformations may be made to the technical solution of the present disclosure within a range of the technical concept of the present disclosure, and these simple deformations fall within the protection scope of the present disclosure.

In addition, it should be noted that, the specific technical features described in the above specific implementations may be combined in any suitable manner without contradiction. To avoid unnecessary repetition, various possible combinations are not further described in the present disclosure.

In addition, the various implementations of the present disclosure may be combined arbitrarily as long as it does not deviate from the idea of the present disclosure, and the combination should also be regarded as the contents of the present disclosure.

## Claims

1. A power battery heat exchanger (1000), comprising:
a connector (400), the connector (400) comprising an inlet (401) and an outlet (402);
a first collecting tube assembly (200) and a second collecting tube assembly (300) arranged spaced away in a first direction, the first collecting tube assembly (200) comprising a first collecting tube (210) and a second collecting tube (220); and
a plurality of harmonica tubes (100), arranged between the first collecting tube assembly (200) and the second collecting tube assembly (300) and arranged at intervals in a second direction; the harmonica tube (100) comprising a first end (101) and a second end (102) that are opposite to each other; the inlet (401) of the connector (400) being respectively in communication with first ends (101) of some harmonica tubes (100) through the first collecting tube (210), and the outlet (402) of the connector (400) being respectively in communication with first ends (101) of other harmonica tubes (100) through the second collecting tube (220); and second ends (102) of the plurality of harmonica tubes (100) being in communication through the second collecting tube assembly (300).

2. The power battery heat exchanger (1000) according to claim 1, wherein the first direction is perpendicular to the second direction.

3. The power battery heat exchanger (1000) according to claim 1 or 2, wherein in the second direction, at least two outermost harmonica tubes (100) are in communication with the first collecting tube (210).

4. The power battery heat exchanger (1000) according to any one of claims 1 to 3, wherein a quantity of harmonica tubes (100) is an even number, and a quantity of harmonica tubes (100) connected to the first collecting tube (210) is equal to a quantity of harmonica tubes (100) connected to the second collecting tube (220).

5. The power battery heat exchanger (1000) according to any one of claims 1 to 4, wherein the quantity of harmonica tubes (100) is eight, in the second direction, four innermost harmonica tubes (100) are respectively in communication with the second collecting tube (220), and other four harmonica tubes (100) are respectively in communication with the first collecting tube (210).

6. The power battery heat exchanger (1000) according to any one of claims 1 to 4, wherein the quantity of harmonica tubes (100) is eight, in the second direction, two outermost harmonica tubes (100) and two innermost harmonica tubes (100) are respectively in communication with the first collecting tube (210), and other four harmonica tubes (100) are respectively in communication with the second collecting tube (220).

7. The power battery heat exchanger (1000) according to claim 6, wherein the second collecting tube assembly (300) comprises a third collecting tube (310) and a fourth collecting tube (320);
the third collecting tube (310) is in communication with second ends (102) of four adjacently arranged harmonica tubes (100); and the fourth collecting tube (320) is in communication with second ends (102) of other four adjacently arranged harmonica tubes (100).

8. The power battery heat exchanger (1000) according to any one of claims 1 to 7, the power battery heat exchanger (1000) further comprising a vapor chamber (500) arranged on a side of the plurality of harmonica tubes (100), the plurality of harmonica tubes (100) being fixedly connected to the vapor chamber (500).

9. The power battery heat exchanger (1000) according to any one of claims 1 to 8, wherein the first collecting tube (210) is provided with a plurality of first strip holes (211) extending in a length direction of the first collecting tube (210), and the harmonica tube (100) is fixedly connected to the first strip hole (211), to cause a plurality of flow channels (110) of the harmonica tube (100) to be in communication with the first collecting tube (210); and/or
the second collecting tube (220) is provided with a plurality of second strip holes (221) extending in a length direction of the second collecting tube (220), and the harmonica tube (100) is fixedly connected to the second strip hole (221), to cause the plurality of flow channels (110) of the harmonica tube (100) to be in communication with the second collecting tube (220).

10. The power battery heat exchanger (1000) according to any one of claims 1 to 9, wherein the connector (400) comprises a liquid inlet (403) in communication with the inlet (401) and a liquid outlet (404) in communication with the outlet (402), the liquid inlet (403) is in communication with the first collecting tube (210) through a first connection tube (230), and the liquid outlet (404) is in communication with the second collecting tube (220) through a second connection tube (240).

11. A power battery system (2000), comprising a power battery (600), further comprising the power battery heat exchanger (1000) according to any one of claims 1 to 10, the power battery heat exchanger (1000) being arranged on a surface of the power battery (600) and being configured to heat and/or cool the power battery (600).

12. An electric vehicle (3000), comprising the power battery system (2000) according to claim 11.
